# FASCICULE DE BREVET EUROPEEN

(11) **EP 0 645 657 B1**
(45) Date de publication et mention de la délivrance du brevet: **26.01.2000**
(21) Numéro de dépôt: 94402110.4
(22) Date de dépôt: 22.09.1994
(51) Int. Cl.: G02B 6/44

(54) **Dispositif de raccordement pour fibres optiques**
Vorrichtung zum Verbinden optischer Fasern
Connecting device for optical fibres

(30) Priorité: 24.09.1993 FR 9311405
(43) Date de publication de la demande: 29.03.1995
(73) Titulaire: FRANCE TELECOM, 75015 Paris (FR)
(72) Inventeur: Blanchard, Anne-Marie, F-22560 Pleumeur Bodou (FR); Petit, Régis, F-22700 St Quay Perros (FR); Aoustin, Hervé, F-22700 Perros Guirec (FR)
(74) Mandataire: Schrimpf, Robert

(56) Documents cités:
- EP-A- 0 356 942
- EP-A- 0 549 963
- EP-A- 0 557 190
- FR-A- 2 646 928

## Description

La présente invention concerne un dispositif de raccordement pour fibres optiques, parfois appelé organiseur d'épissures ou tête de câble.

On connaît par la demande de brevet français FR-2 646 928 un dispositif de raccordement comprenant un châssis de forme allongée parallélépipédique, muni d'une pluralité de cassettes articulées comportant chacune des moyens pour loger des longueurs de réserve de fibres optiques et les épissures des fibres optiques raccordées. L'amenée des fibres optiques dans le châssis et le départ des fibres optiques vers l'extérieur s'effectue au travers de parois opposées du châssis et le pivotement des cassettes s'effectue autour d'axes parallèles à ces parois opposées. Les fibres optiques entrent et sortent d'une cassette par des passages ménagés sur une paroi de celle-ci parallèle à l'axe de pivotement, ce qui oblige, pour respecter le rayon de courbure minimum des fibres optiques permettant une transmission correcte de la lumière, à éloigner les cassettes de leur axe de pivotement en les montant à l'extrémité de bras articulés. Le pivotement des cassettes s'effectue ainsi dans un volume important, au détriment de la capacité de stockage de fibres optiques, et sur le côté par rapport à l'opérateur chargé du câblage, ce qui rend malaisé les opérations à effectuer dans les cassettes. Un tube est prévu pour guider les fibres optiques depuis le départ des cassettes, et l'insertion des fibres optiques dans ce tube est une opération coûteuse en temps de main-d'oeuvre.

La présente invention vise à remédier à ces inconvénients, et propose un dispositif de raccordement perfectionné, destiné à faciliter notamment les opérations de câblage et d'épissurage des fibres optiques, tout en offrant une grande capacité de stockage de fibres optiques, ce dispositif de raccordement étant du type comprenant un châssis présentant deux parois latérales réunies inférieurement par un fond et comportant une pluralité de cassettes articulées et superposées, munies chacune d'elles de moyens pour loger des longueurs de réserve de fibres optiques et les épissures des fibres optiques raccordées.

On connaît par EP-A-0 557 190 un dispositif de raccordement comprenant un ensemble de cassettes surperposées, porté par un plateau-support, suivant lequel les cassettes sont articulées les unes aux autres, avec la cassette inférieure fixée au plateau-support.

On connaît déjà par EP 356 942 un dispositif de raccordement pour fibres optiques, comprenant :
- un châssis allongé présentant deux parois latérales réunies inférieurement par un fond, une ouverture dans l'une des parois latérales du châssis pour l'introduction de fibres optiques, ainsi qu'un panneau longitudinal pour le montage de connecteurs de raccordement des fibres optiques à des modules opto-électroniques,
- un plateau de support horizontal, monté avec une possibilité de coulissement vers l'avant entre les deux parois latérales du châssis et ménageant avec le fond de ce dernier un espace protégé d'épanouissement des fibres optiques lorsque le plateau est en position arrière, ledit espace devenant accessible par le dessus lorsque le plateau est amené par coulissement en position avant, et
- une pluralité de cassettes superposées, munies chacune d'une entrée et d'une sortie latérale pour les fibres optiques, et de moyens pour loger des longueurs de réserve de fibres optiques et les épissures des fibres raccordées, ladite pluralité de cassettes étant portée par ledit plateau support.

Le dispositif proposé par l'invention est un dispositif de ce type et est caractérisé en ce que :
- les cassettes sont articulées les unes sur les autres, la cassette inférieure de ladite pluralité étant fixée sur le plateau support et les autres cassettes de ladite pluralité étant aptes à basculer vers l'arrière pour libérer l'accès à une cassette située en dessous,
- le châssis comporte en outre une paroi longitudinale avant s'étendant dans le sens de la hauteur au dessous du niveau du plateau de support des cassettes, ledit panneau pour le montage des connecteurs de raccordement des fibres étant constitué par ladite paroi longitudinale avant, et
- le dispositif comporte en outre des moyens de guidage des fibres optiques dans ledit espace protégé, agencés pour guider des fibres optiques, en respectant le rayon de courbure minimum, entre l'ouverture dans la paroi latérale du châssis, les connecteurs de raccordement devant être montés dans ladite paroi longitudinale avant et les entrées et sorties latérales des cassettes.

De préférence, chaque cassette comporte une entrée et une sortie latérales de fibres optiques, situées à l'opposé l'une de l'autre, deux tambours sur lesquels sont lovées les fibres optiques arrivant et partant respectivement par ladite entrée et ladite sortie latérales et un boîtier destiné à ranger les épissures, situé entre les deux tambours.

De préférence, les cassettes sont munies à l'arrière de pattes de montage formées par pliage à angle droit d'un bord arrière relevé de la cassette ou venues de moulage, traversées chacune par deux perçages pour la liaison articulée avec une cassette immédiatement supérieure et une cassette immédiatement inférieure respectivement, lesdites entrées et sorties latérales de fibres optiques étant formées à proximité desdites pattes de montage.

De préférence, les cassettes sont articulées de sorte que le pivotement vers l'arrière s'effectue sur plus de 90°.

De préférence, les cassettes situées sous la cassette supérieure sont munies chacune de premiers moyens d'accrochage et les cassettes situées au-dessus de la cassette inférieure sont munies chacune de seconds moyens d'accrochage aptes à coopérer avec les premiers moyens d'accrochage, de façon amovible, pour solidariser les cassettes entre elles, les premiers et seconds moyens d'accrochage étant du type mettant en oeuvre un tissu à boucles et un tissu à crochets.

Avantageusement, ladite ouverture du châssis est ménagée sur un côté du châssis au dessous du plateau de support, et le dispositif comporte une pièce de guidage apte à conférer aux fibres optiques, à l'extérieur du châssis, un rayon de courbure suffisant lors de leur passage par ladite ouverture, munie de moyens de montage réversibles sur le châssis de sorte que la pièce de guidage peut être orientée vers le bas ou vers le haut selon la direction à donner aux fibres optiques à l'extérieur du châssis.

De préférence, des étriers de guidage des fibres optiques sont disposés sur le fond du châssis, sur une paroi arrière du châssis et sur ses parois latérales, pour guider les fibres optiques depuis ladite ouverture du châssis selon une ligne infléchie dont la concavité, puis la convexité est orientée vers une première paroi latérale du châssis du côté de laquelle est ménagée ladite ouverture, selon une ligne décrivant un U dont la concavité est orientée vers ladite première paroi latérale, selon une ligne rectiligne longeant la paroi arrière du châssis en allant vers le haut et selon une ligne décrivant un U dont la convexité est orientée vers ladite première paroi latérale jusqu'aux entrées latérales des cassettes, et depuis les sorties latérales des cassettes, selon une ligne décrivant un U dont la concavité est orientée vers ladite première paroi latérale, selon une ligne rectiligne longeant la paroi arrière du châssis en descendant et selon une ligne faisant un virage à 90° vers la paroi avant.

De préférence, le châssis est installé entre deux montants verticaux d'un bâti au moyen de pièces de fixation comportant chacune une semelle à rapporter sur la face interne d'une paroi latérale du châssis et des crochets à engager dans des perçages de la paroi latérale et du montant adjacent.

D'autres caractéristiques et avantages de la présente invention apparaîtront à la lecture de la description détaillée qui va suivre, d'un exemple de réalisation non limitatif de l'invention et à l'examen du dessin annexé sur lequel :
- la figure 1 est une vue en perspective d'un dispositif de raccordement conforme à l'invention, installé entre deux montants d'un bâti, le plateau de support des cassettes étant représenté en position sortie,
- la figure 2 est une vue analogue à la figure 1, montrant le dispositif de raccordement avec les cassettes basculées vers l'arrière pour libérer l'accès à la cassette inférieure,
- la figure 3 est une vue en perspective montrant le dispositif de raccordement avec le plateau de support des cassettes représenté en position rétractée,
- la figure 4 est une vue de dessus indiquant schématiquement le trajet des fibres optiques à l'intérieur du châssis,
- la figure 5 est une vue en perspective, partielle, montrant la paroi avant équipée de différents types de connecteurs,
- la figure 6 est une vue de face d'un exemple de réalisation d'une découpe de la paroi avant,
- la figure 7 est une vue de dessus d'une pièce de fixation utilisée pour installer le châssis entre les montants du bâti,
- la figure 8 est une vue de côté selon la flèche VIII de la figure 7, et
- la figure 9 est une vue en perspective, partielle, d'une cassette.

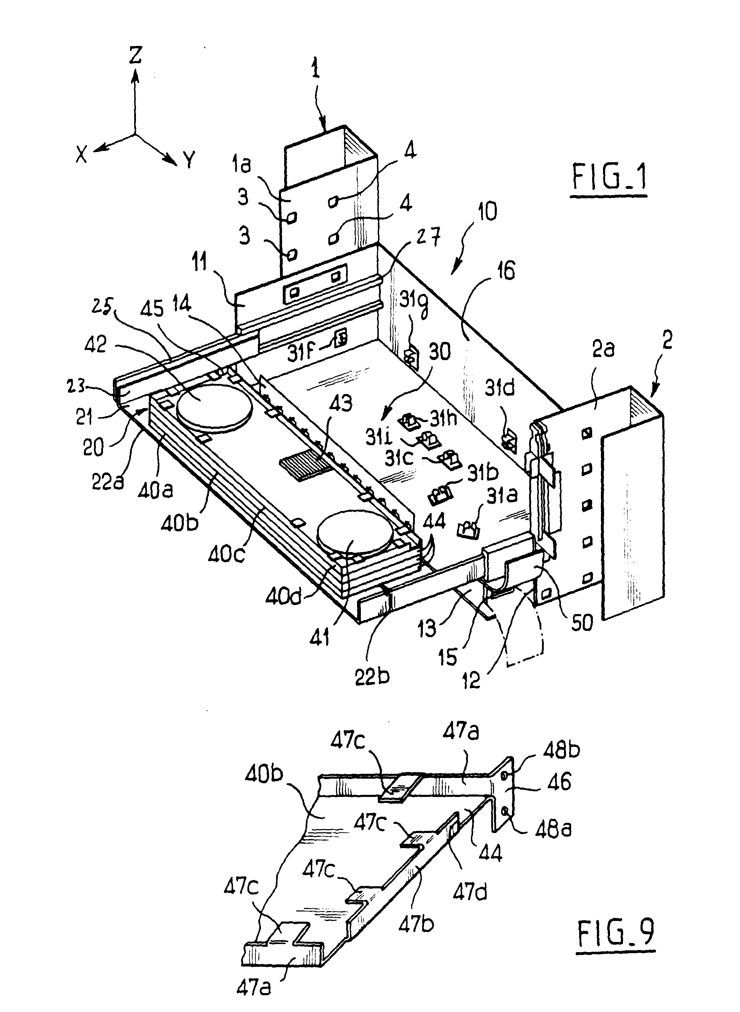

Dans toute la description qui suit, les mots ou groupes de mots "avant, arrière" et "hauteur" se réfèreront respectivement aux axes X et Z du repère orthogonal (XYZ) représenté sur la figure 1.

Le dispositif de raccordement conforme à l'invention représenté sur les figures 1 à 9 comprend un châssis 10 allongé dans la direction de l'axe Y, à installer entre deux montants verticaux 1 et 2, s'étendant selon l'axe Z, d'un bâti connu en lui-même. Les montants verticaux 1 et 2 présentent deux parois 1a et 2a planes et parallèles au plan XZ, sur chacune desquelles sont ménagés des perçages 3, 4 juxtaposés horizontalement et régulièrement espacés verticalement, pour le montage du châssis 10 à une hauteur souhaitée. Ces perçages 3, 4 présentent une section carrée et le bord inférieur de deux perçages 3, 4 juxtaposés horizontalement se situe dans un même plan horizontal parallèle au plan XY.

Le châssis 10 présente deux parois latérales 11 et 12, planes et parallèles, fixées sur les parois 1a et 2a des montants 1 et 2 respectivement. Avantageusement, le montage du châssis 10 sur les parois 1a et 2a s'effectue au moyen de deux pièces de fixation 300, dont on a représenté un exemplaire sur les figures 7 et 8. Chaque pièce de fixation 300 est symétrique par rapport à un plan médian de symétrie P, comprend une semelle plane allongée 305 et deux crochets 301 et 302 venus de formation avec celle-ci et formant saillie sur l'une de ses faces principales. Les crochets 301 et 302 sont formés par découpage puis pliage en équerre de deux languettes situées chacune au voisinage d'une extrémité longitudinale 308, 309 de la semelle 305.

On a référencé 306 la paroi de raccordement des languettes sur la semelle 305, et 307 la paroi d'extrémité des languettes, parallèle au plan de la semelle 305, formant un coude à angle droit avec la paroi de raccordement 306 en direction de l'extrémité longitudinale 308. La semelle 305 est taraudée en 305a entre l'extrémité longitudinale 309 et le crochet 301. Les semelles 305 des pièces de fixation 300 sont respectivement rapportées sur les faces en regard des parois latérales 11 et 12 et les crochets 301 et 302 sont introduits, à la faveur de perçages de ces parois latérales, dans des perçages 3 et 4 des montants 1 et 2, puis les semelles sont déplacées horizontalement jusqu'à ce que les parois de raccordement 306 butent contre les bords verticaux des perçages 3 et 4. La distance entre les faces en regard de la semelle 305 et des parois d'extrémité 307 est légèrement supérieure à l'épaisseur totale d'une paroi 1a ou 2a d'un montant du bâti et d'une paroi latérale 11 ou 12 du châssis 10. Deux vis d'immobilisation des pièces de fixation 300 sont ensuite respectivement introduites dans les taraudages 305a.

Les parois latérales 11 et 12 sont réunies, sur leur bord vertical arrière, par une paroi arrière 16 s'étendant verticalement perpendiculairement au plan des parois latérales 11 et 12, et sur leur bord inférieur horizontal, par un fond horizontal 13 s'étendant perpendiculairement au plan des parois latérales 11 et 12 et au plan de la paroi arrière 16. Le châssis 10 présente une paroi avant 14 s'étendant perpendiculairement au plan du fond 13, venue de pliage avec celui-ci, pour le montage sur le châssis 10 d'une pluralité de connecteurs de raccordement, comme cela sera précisé dans la suite. La paroi avant 14 s'étend sur une hauteur inférieure à celle des parois latérales 11 et 12 et, dans l'exemple de réalisation décrit, sur le quart environ de la hauteur de ces dernières. Le bord vertical avant de la paroi latérale 12 se situe en retrait, selon l'axe X, du bord vertical avant de la paroi latérale 11. Le bord horizontal avant du fond 13 se situe dans un même plan vertical, perpendiculaire à l'axe X, que le bord vertical avant de la paroi latérale 11.

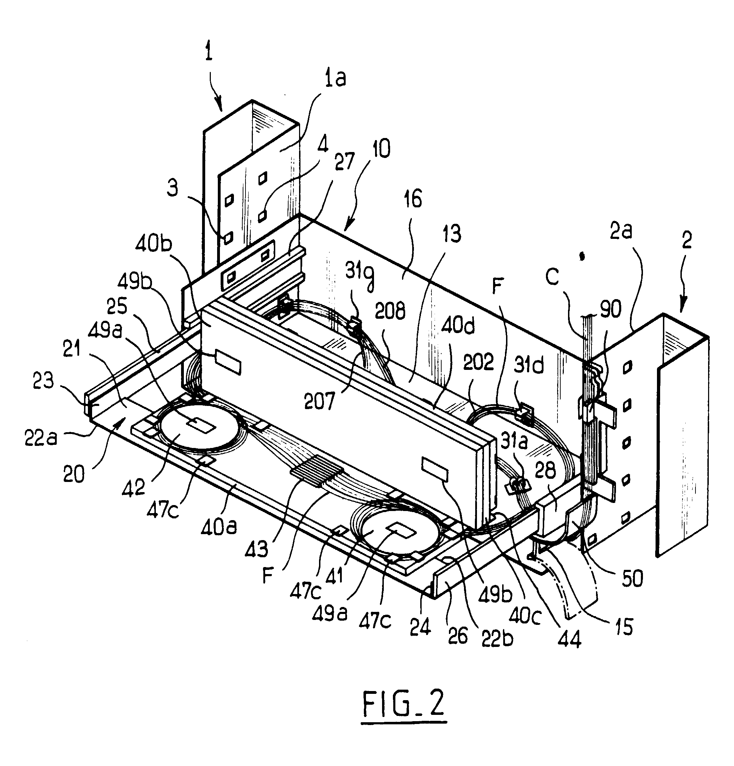

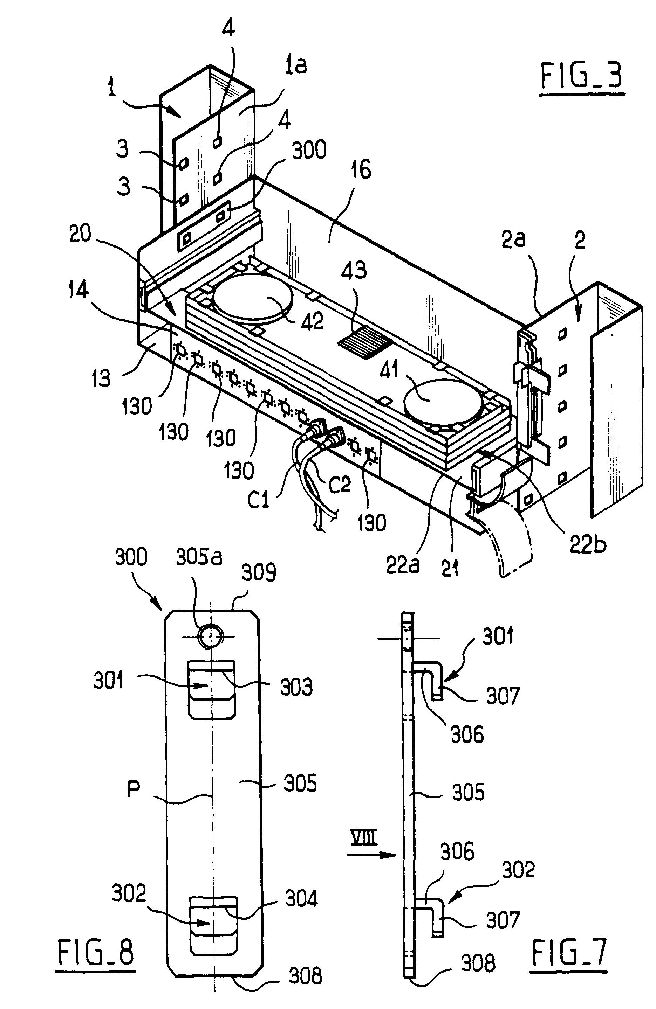

Un plateau de support 20 est monté avec une possibilité de coulissement vers l'avant selon l'axe X au-dessus de la paroi avant 14, entre les deux parois latérales 11 et 12 du châssis 10. Plus particulièrement, le plateau de support 20 comporte une plaque de base 21 plane et horizontale, de forme rectangulaire allongée selon l'axe Y, délimitée selon l'axe X par des bords avant 22a et arrière 22b parallèles, et la plaque de base 21 est munie à ses extrémités longitudinales, de bords latéraux relevés 23 et 24 s'étendant verticalement et depuis le bord avant horizontal 22a de la plaque de base 21 vers l'arrière, au-delà du bord arrière horizontal 22b et sur une longueur correspondant sensiblement à la profondeur du châssis 10 mesurée selon l'axe X entre le plan de la paroi avant 14 et le plan de la paroi arrière 16. Les bords latéraux relevés 23 et 24 sont respectivement fixés par leur face externe sur deux rails 25 et 26 montés à coulissement dans des glissières horizontales 27 et 28 rapportées sur les faces en regard des parois latérales 11 et 12. Le plateau de support 20 peut coulisser selon l'axe X entre une position escamotée, représentée sur la figure 3 et une position sortie représentée sur les figures 1 et 2.

Sur la face supérieure de la plaque de base 21 est montée une pluralité de cassettes 40a, 40b, 40c et 40d articulées entre elles et superposées, comprenant chacune des moyens pour loger des longueurs de réserve de fibres optiques et les épissures des fibres optiques raccordées. Chaque cassette comporte un cadre de cassette de forme générale rectangulaire allongée selon l'axe Y, constitué d'une paroi de fond plane délimitée selon l'axe X par deux bords relevés longitudinaux 47a parallèles et opposés et selon l'axe Y par deux bords latéraux 47b parallèles et opposés, de même hauteur que les bords longitudinaux 47a, venus de pliage ou de moulage avec la paroi de fond. Plus particulièrement, la cassette inférieure référencée 40a repose en porte-à-faux par sa face inférieure sur la plaque de base 21, avec son bord relevé longitudinal avant 47a situé légèrement en retrait du bord longitudinal avant 22a de la plaque de base 21. La longueur selon l'axe X des bords latéraux 47b correspond à peu près au double de la largeur de la plaque de base 21.

Chaque cassette est articulée autour d'un axe de pivotement parallèle à l'axe Y au moyen de deux pattes de montage latérales 46 venues de pliage ou de moulage avec le cadre de la cassette. On a représenté, à titre d'illustration, sur la figure 9 le coin arrière droit de la cassette 40b. On aperçoit sur cette figure une patte de montage 46 formée par pliage, autour d'une ligne de pliage perpendiculaire au plan de la paroi de fond du cadre de la cassette, d'une languette initialement située dans le prolongement du bord longitudinal arrière 47a et présentant une partie s'étendant vers le bas sous la paroi de fond du cadre de la cassette, sur une hauteur correspondant sensiblement à la hauteur des bords relevés 47a et 47b. La patte de montage 46 est munie de deux perçages 48a et 48b situés respectivement au-dessous et au-dessus du plan de la paroi de fond du cadre de la cassette. Ces perçages 48a et 48b sont aptes à accueillir chacun un axe d'articulation du cadre respectivement sur la cassette immédiatement inférieure et sur la cassette immédiatement supérieure. Des languettes de retenue 47c sont formées par pliage à angle droit vers l'intérieur d'extensions prolongeant vers le haut les bords relevés 47a et 47b et sont destinées à maintenir les fibres optiques enroulées sur des tambours 41 et 42 rapportés sur la paroi de fond de chaque cassette, comme cela sera précisé par la suite.

Une ouverture 15 est ménagée en avant de la paroi latérale 12 pour l'amenée et le départ des fibres optiques entre l'extérieur et l'intérieur du châssis 10. Cette ouverture 15 débouche dans un espace protégé 30 d'épanouissement des fibres optiques, délimité inférieurement par le fond 13 du châssis 10, à l'arrière par la paroi arrière 16, sur les côtés par les parois latérales 11 et 12, à l'avant par la paroi avant 14 et supérieurement, lorsque le plateau de support 20 est en position sortie comme représenté sur la figure 3, par la plaque de base 21 munie de la cassette inférieure 40a. Lorsque le plateau de support 20 est en position escamotée comme représenté sur les figures 1 et 2, l'espace protégé 30 est entièrement accessible par le dessus. L'ouverture 15 est située entre les deux branches d'un étrier fixé par sa base sur le fond 13 du châssis.

Ces branches d'étrier présentent des faces opposées crantées pour le montage, amovible, sur celles-ci d'une pièce de guidage 50 destinée à conférer aux fibres optiques un rayon de courbure suffisamment grand pour une transmission correcte de la lumière entre l'ouverture 15 et un câble C d'amenée ou de départ des fibres optiques. La pièce de guidage 50 est constituée par une plaque cintrée à 90°, munie à une extrémité de deux perçages à introduire dans les branches de l'étrier, ces dernières étant aptes à se déformer élastiquement en rapprochement l'une de l'autre lors de l'insertion de la plaque sur l'étrier. La pièce de guidage 50 est montée sur l'étrier avec la convexité de sa plaque cintrée orientée vers le haut ou vers le bas selon la direction à conférer aux fibres optiques à l'extérieur du châssis 10.

Des moyens de guidage des fibres optiques, qui seront précisés dans la suite, sont prévus dans l'espace protégé 30 d'épanouissement des fibres optiques pour guider celles-ci en respectant un rayon de courbure minimum, depuis l'ouverture 15 jusqu'à des entrées et sorties latérales des fibres optiques dans les cassettes, respectivement référencées 44 et 45, situées dans le plan des bords latéraux relevés 47b des cassettes. Les entrées 44 et sorties 45 latérales se situent à proximité de l'axe de pivotement de chaque cassette, défini par l'axe des perçages 48a des pattes de montage 46, entre l'arête arrière verticale 47d d'un bord latéral relevé 47b et le bord relevé arrière 47a, de sorte que les fibres optiques se déplacent peu lorsque les cassettes sont basculées.

On a représenté sur la figure 2 le dispositif de raccordement avec les trois cassettes 40b, 40c, 40d en position relevée vers l'arrière pour libérer l'accès à la cassette inférieure 40a. Chaque cassette comprend des moyens pour loger des longueurs de réserve de fibres optiques, destinées à des opérations ultérieures d'épissurage ou de raccordement, et des moyens pour ranger les épissures des fibres raccordées.

Plus particulièrement, comme représenté, chaque cassette comprend deux tambours 41 et 42 sur lesquels sont lovées les fibres optiques arrivant et sortant respectivement par les entrées 44 et sorties 45 latérales et un boîtier 43 situé entre les deux tambours 41 et 42, présentant une pluralité d'encoches juxtaposées, orientées parallèlement à l'axe Y, pour ranger les épissures des fibres optiques raccordées. Les tambours 41 et 42 présentent un diamètre légèrement inférieur à la largeur des cassettes et se situent respectivement sur ces dernières à proximité des bords relevés latéraux 47b. Les languettes de retenue 47c précitées s'étendent deux à deux au-dessus des fibres optiques enroulées sur les tambours 41 et 42, entre ces derniers et les bords longitudinaux 47a et latéraux 47b pour maintenir les fibres optiques en place lorsque les cassettes sont basculées. Le diamètre des tambours 41 et 42 permet de respecter le rayon de courbure imposé au lovage des fibres optiques.

Le câble C d'amenée des fibres optiques est fixé, de façon connue en soi, au moyen d'un ou plusieurs colliers, au montant 2 du bâti, au-dessus du plan horizontal contenant les bords horizontaux supérieurs des parois 11, 12 et 16. Les fibres optiques s'étendent nues hors du câble C depuis son point de fixation sur le montant 2 vers le bas et pénètrent dans l'espace protégé 30 d'épanouissement des fibres à l'intérieur du châssis par l'ouverture 15, comme représenté sur la figure 2. Les fibres optiques sont guidées dans cet espace protégé 30 par des étriers de guidage 31a, ..., 31i en matière plastique, comprenant chacun une embase à coller sur une paroi du châssis et deux branches se raccordant chacune à une extrémité perpendiculairement sur cette embase. Les deux branches définissent à leur extrémité libre deux rampes convergeant en direction de l'embase, aptes à se déformer élastiquement en écartement l'une de l'autre pour permettre l'insertion des fibres optiques entre les branches et leur rétention sur l'étrier de guidage.

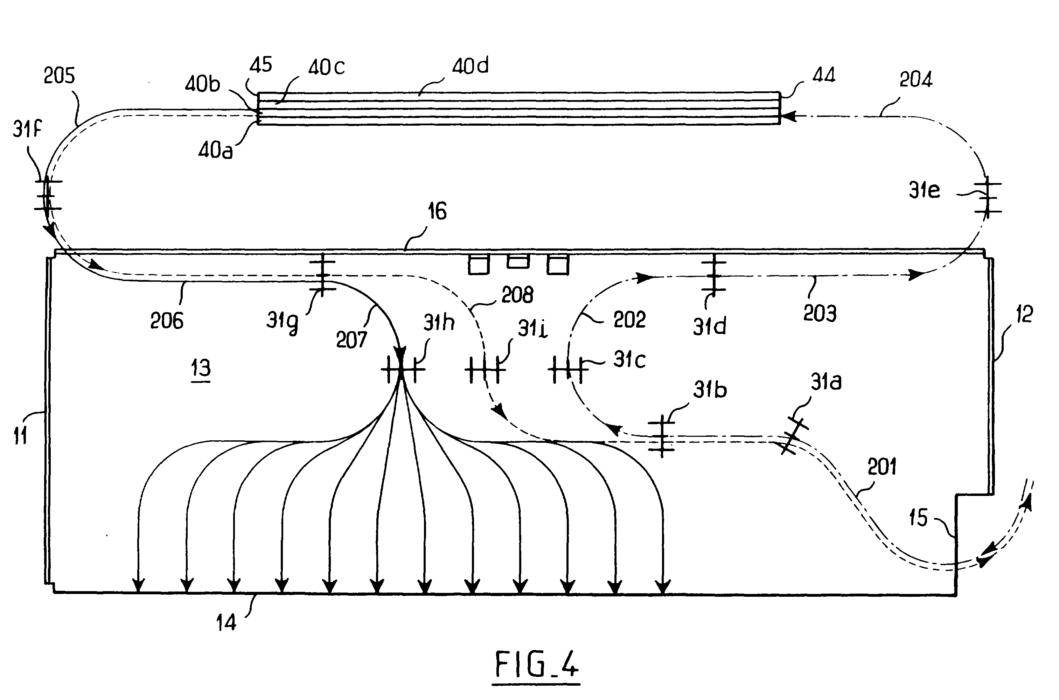

En se référant plus particulièrement à la figure 4, on remarque que le fond 13 du châssis 10 comporte une première série de quatre étriers de guidage disposés pour guider les fibres optiques depuis l'ouverture 15 vers l'entrée latérale 44 des cassettes, située du côté de l'ouverture 15. Les fibres optiques s'étendent à partir de l'ouverture 15 selon une ligne infléchie 201, concave puis convexe vers la droite sur le dessin, c'est-à-dire vers la paroi latérale 12, jusqu'à un premier étrier 31a.

Un deuxième 31b et troisième 31c étriers de guidage sont disposés sur la paroi de fond 13 pour guider les fibres optiques depuis le premier étrier de guidage 31a jusqu'à un quatrième étrier de guidage 31d disposé sur la paroi arrière 16, selon une ligne 202 décrivant un U dont la concavité est tournée vers la paroi latérale 12. Le troisième étrier 31c est positionné dans le fond de la ligne 202. Un cinquième étrier de guidage 31e est fixé sur la paroi latérale 12 pour guider les fibres optiques depuis le quatrième étrier de guidage 31d vers l'entrée latérale 44 des cassettes selon une ligne montante 203 longeant la paroi arrière 16 puis selon une ligne 204 décrivant un U dont la concavité est orientée vers la paroi latérale 11.

Une deuxième série d'étriers de guidage est disposée pour guider les fibres optiques depuis la sortie latérale 45 des cassettes vers la paroi avant 14 ou vers l'ouverture 15, selon que l'on destine ces fibres optiques à être raccordées à des connecteurs disposés sur la paroi avant 14 ou à être dirigées vers l'extérieur du châssis 10. Un sixième étrier de guidage 31f est disposé sur la paroi latérale 11 pour guider les fibres optiques depuis la sortie latérale 45 des cassettes vers l'espace protégé 30 d'épanouissement des fibres optiques selon une ligne 205 décrivant un U dont la concavité est tournée vers la paroi latérale 12 du châssis 10. Un septième étrier de guidage 31g est disposé sur la paroi arrière 16 pour guider les fibres optiques depuis le sixième étrier de guidage 31f le long d'une ligne 206 rectiligne s'étendant vers le bas. Les fibres optiques à diriger vers la paroi avant 14 sont guidées, depuis le septième étrier de guidage 31g, par un huitième étrier de guidage 31h selon une ligne 207 décrivant un virage à 90° vers la paroi avant 14 et les fibres optiques à diriger vers l'ouverture 15 sont guidées par un neuvième étrier de guidage 31i vers le deuxième étrier de guidage 31b précité, selon une ligne infléchie 208 concave puis convexe vers la paroi latérale 11, et dont le point d'inflexion se situe au niveau du neuvième étrier de guidage 31i. Les fibres optiques rejoignent ensuite l'ouverture 15 selon la ligne infléchie 201.

Le pivotement vers l'arrière des cassettes s'effectue sur un angle supérieur à 90° de sorte que ces dernières sont retenues en position d'ouverture de façon stable sous l'effet de leur propre poids.

Des moyens sont prévus pour solidariser, de façon amovible, les cassettes. Cette solidarisation s'effectue de préférence, comme représenté, au moyen de bandes de tissu à boucles 49a, collées sur la face supérieure des tambours 41 et 42 des cassettes 40a, 40b, 40c et au moyen de bandes de tissu à crochets 49b, collées sur la face inférieure de la paroi de fond des cadres des cassettes 40b, 40c et 40d, aptes à venir s'accrocher sur les bandes de tissu 49a de la cassette immédiatement inférieure.

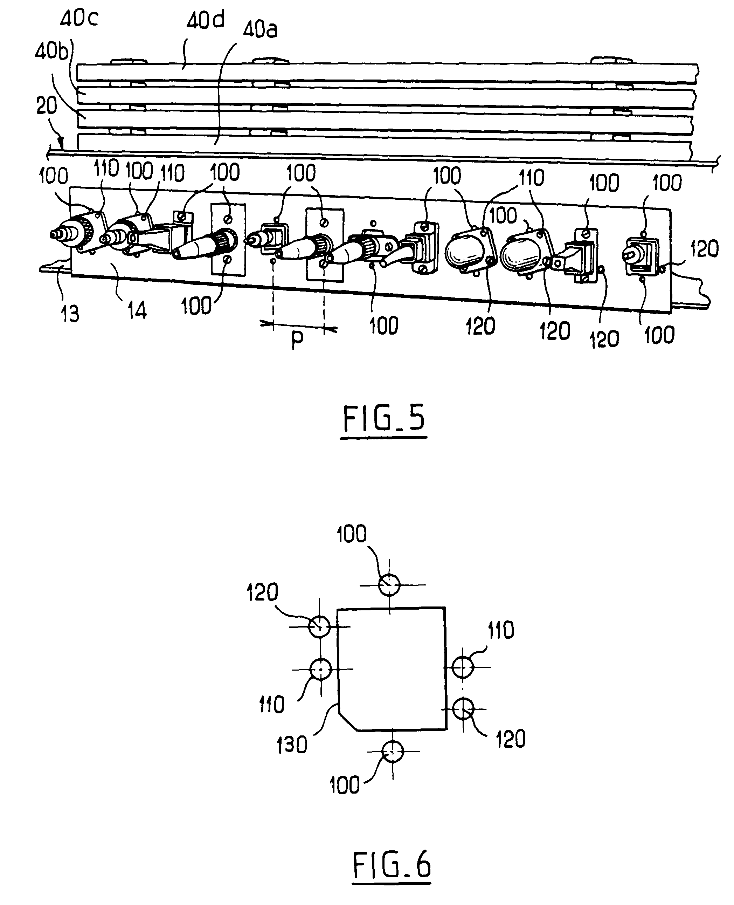

La paroi avant 14 est munie, comme représenté sur les figures 5 et 6, d'une pluralité de découpes identiques 130 régulièrement espacées destinées au montage de connecteurs sur cette paroi. La forme de la découpe 130 est choisie de façon à permettre le montage sur la paroi avant 14 de plusieurs types de connecteurs différents. De préférence, chaque découpe 130 est rectangulaire avec un coin tronqué et elle est bordée, verticalement par deux perçages 100 situés de part et d'autre de la découpe, et latéralement par deux couples de perçages 110 et 120 symétriques par rapport à l'intersection des médiatrices reliant les côtés opposés de la découpe 130.

On a représenté sur la figure 3 le dispositif de raccordement équipé sur sa paroi avant 14 de deux connecteurs reliés respectivement, par des câbles C1 et C2, à une source laser et un dispositif de conversion opto-électronique.

Finalement, le dispositif de raccordement selon l'invention offre une grande capacité de stockage des fibres optiques sous un faible encombrement, permet d'assurer un logement stable et protégé des fibres optiques et une grande fiabilité du raccordement. Le pivotement des cassettes s'effectue de face par rapport à l'opérateur de sorte que la manipulation des fibres optiques et des épissures est aisée. Les fibres optiques s'étendent nues entre le câble d'amenée ou de départ C et les cassettes ainsi qu'entre les cassettes et les connecteurs de raccordement sans qu'il soit nécessaire de les protéger ou de les guider par un tube comme cela est le cas du dispositif connu auquel il est fait référence dans le préambule.

Bien entendu on peut proposer d'apporter des modifications au dispositif décrit sans sortir du cadre de la présente invention. On peut, par exemple, prévoir un nombre de cassettes différent ou équiper le châssis d'un couvercle ou de moyens d'étanchéité appropriés.

## Revendications

1. Dispositif de raccordement pour fibres optiques (F) comprenant :
- un châssis allongé (10) présentant deux parois latérales (11, 12) réunies inférieurement par un fond (13), une ouverture (15) dans l'une des parois latérales du châssis pour l'introduction de fibres optiques, ainsi qu'un panneau longitudinal (14) pour le montage de connecteurs de raccordement des fibres optiques à des modules opto-électroniques,
- un plateau de support (20) horizontal, monté avec une possibilité de coulissement vers l'avant entre les deux parois latérales (11, 12) du châssis (10) et ménageant avec le fond (13) de ce dernier un espace protégé (30) d'épanouissement des fibres optiques lorsque le plateau est en position arrière, ledit espace devenant accessible par le dessus lorsque le plateau est amené par coulissement en position avant et
- une pluralité de cassettes superposées (40a, 40b, 40c, 40d), munies chacune d'une entrée (44) et d'une sortie (45) latérales pour les fibres optiques, et de moyens pour loger des longueurs de réserve de fibres optiques et les épissures des fibres raccordées, ladite pluralité de cassettes étant portée par ledit plateau support,
caractérisé en ce que :
- les cassettes (40a, 40b, 40c, 40d) sont articulées les unes sur les autres, la cassette inférieure (40a) de ladite pluralité étant fixée sur le plateau support (20) et les autres cassettes (40b, 40c, 40d) de ladite pluralité étant aptes à basculer vers l'arrière pour libérer l'accès à une cassette située en dessous,
- le châssis (10) comporte en outre une paroi longitudinale avant (14) s'étendant dans le sens de la hauteur au dessous du niveau du plateau de support des cassettes (40a, 40b, 40c, 40d), ledit panneau pour le montage des connecteurs de raccordement des fibres étant constitué par ladite paroi longitudinale avant (14), et
- le dispositif comporte en outre des moyens de guidage (31a, 31b, 31c, 31d) des fibres optiques dans ledit espace protégé (30), agencés pour guider des fibres optiques, en respectant le rayon de courbure minimum, entre l'ouverture (15) dans la paroi latérale du châssis, les connecteurs de raccordement devant être montés dans ladite paroi longitudinale avant et les entrées (44) et sorties (45) latérales des cassettes.

2. Dispositif selon la revendication 1, caractérisé en ce, dans chaque cassette (40a, 40b, 40c, 40d), l'entrée (44) et la sortie (45) latérales de fibres optiques sont situées à l'opposé l'une de l'autre, et les moyens pour loger les longueurs de réserve et les épissures comportent deux tambours (41, 42) sur lesquels sont lovées les fibres optiques arrivant et partant respectivement par ladite entrée (44) et ladite sortie (45) latérales et un boîtier (43) destiné à ranger les épissures, situé entre les deux tambours (41, 42).

3. Dispositif selon l'une des revendications 1 et 2, caractérisé en ce que les cassettes (40a, 40b, 40c, 40d) sont munies à l'arrière de pattes de montage (46) formées par pliage à angle droit d'un bord arrière (47a) relevé de la cassette ou venues de moulage, traversées chacune par deux perçages (48a, 48b) pour la liaison articulée avec une cassette immédiatement supérieure et une cassette immédiatement inférieure respectivement, lesdites entrées et sorties latérales de fibres optiques étant formées à proximité desdites pattes de montage (46).

4. Dispositif selon l'une des revendications 1 à 3, caractérisé en ce que les cassettes (40a, 40b, 40c, 40d) sont articulées de sorte que le pivotement vers l'arrière s'effectue sur plus de 90°.

5. Dispositif selon l'une des revendications 1 à 4, caractérisé en ce que les cassettes (40a, 40b, 40c) situées sous la cassette supérieure (40d) sont munies chacune de premiers moyens d'accrochage (49a) et les cassettes (40b, 40c, 40d) situées au-dessus de la cassette inférieure (40a) sont munies de seconds moyens d'accrochage (49b) aptes à coopérer avec les premiers moyens d'accrochage, de façon amovible, pour solidariser les cassettes entre elles, les premiers et seconds moyens d'accrochage étant du type mettant en oeuvre un tissu à boucles et un tissu à crochets.

6. Dispositif selon l'une des revendications 1 à 5, caractérisé en ce que ladite ouverture (15) du châssis est ménagée sur un côté du châssis au-dessous du plateau de support (20) en position arrière et en ce que le dispositif comporte une pièce de guidage (50) apte à conférer aux fibres optiques, à l'extérieur du châssis, un rayon de courbure suffisant lors de leur passage par ladite ouverture, munie de moyens de montage réversibles sur le châssis de sorte que la pièce de guidage peut être orientée vers le bas ou vers le haut selon la direction à donner aux fibres optiques à l'extérieur du châssis.

7. Dispositif selon l'une des revendications 1 à 6, caractérisé en ce que la paroi longitudinale (14) comporte une pluralité de découpes identiques (130) et de perçages (100, 110, 120) pour le montage desdits connecteurs de raccordement sur cette paroi, espacés de façon régulière et aptes à permettre le montage de plusieurs types de connecteurs différents.

8. Dispositif selon l'une des revendications 1 à 7, caractérisé en ce que les moyens de guidage des fibres dans ledit espace protégé comprennent des étriers de guidage (31a, 31b, ...) des fibres optiques, disposés sur le fond du châssis, sur une paroi arrière (16) du châssis et sur ses parois latérales (11, 12), pour guider les fibres optiques depuis ladite ouverture (15) selon une ligne infléchie (201) dont la concavité, puis la convexité est orientée vers une première paroi latérale (12) du châssis du côté de laquelle est ménagée ladite ouverture, selon une ligne (202) décrivant un U dont la concavité est orientée vers ladite première paroi latérale (12), selon une ligne rectiligne (203) longeant la paroi arrière (16) du châssis en allant vers le haut et selon une ligne (204) décrivant un U dont la convexité est orientée vers ladite première paroi latérale (12) jusqu'aux entrées latérales (44) des cassettes, et depuis les sorties latérales (45) des cassettes, selon une ligne (205) décrivant un U dont la concavité est orientée vers ladite première paroi latérale (12), selon une ligne rectiligne (206) longeant la paroi arrière (16) du châssis en descendant et selon une ligne (207) faisant un virage à 90° vers la paroi avant (14).

9. Dispositif selon l'une des revendications 1 à 8, caractérisé en ce que le châssis (10) est à installer entre deux montants verticaux (1, 2) d'un bâti, au moyen de pièces de fixation (300) comportant chacune une semelle (305) à rapporter sur la face interne d'une paroi latérale du châssis et des crochets (301, 302) à engager dans des perçages de la paroi latérale et du montant adjacent.

## Claims

1. Connecting device for optical fibres (F), which comprises:
- an elongate rack (10) having two vertical side walls (11, 12) joined at the bottom by a horizontal bottom (13), an opening (15) in one of the side walls of the rack for introducing optical fibres, as well as a vertical panel (14) for mounting connectors for connecting the optical fibres to optoelectronic modules,
- a horizontal support tray (20), mounted with the possibility of sliding forwards between the two side walls (11, 12) of the rack (10) and providing, with the bottom (13) of the latter, a protected space (30) for fanning-out the optical fibres when the tray is in the rear position, the said space becoming accessible from above when the tray is brought by sliding into the forward position, and
- a plurality of stacked cassettes (40a, 40b, 40c, 40d), each provided with a lateral inlet (44) and with a lateral outlet (45) for the optical fibres, and means for housing reserve lengths of optical fibres and the splices of the connected fibres, the said plurality of cassettes being carried by the said support tray,
characterized in that:
- the cassettes (40a, 40b, 40c, 40d) are hinged to each other, the bottom cassette (40a) of the said plurality being fastened to the support tray (20) and the other cassettes (40b, 40c, 40d) of the said plurality being able to swing to the rear in order to free the access to a cassette located beneath,
- the rack (10) furthermore includes a front longitudinal wall (14) extending vertically below the level of the support tray for the cassettes (40a, 40b, 40c, 40d), the said panel for mounting the connectors for connecting the fibres consisting of the said front longitudinal wall (14), and
- the device furthermore includes means (31a, 31b, 31c, 31d) for guiding the optical fibres in the said protected space (30), the said means being designed to guide the optical fibres, while respecting the minimum radius of curvature, between the opening (15) in the side wall of the rack, the connecting connectors having to be mounted in the said front longitudinal wall, and the lateral inlets (44) and outlets (45) of the cassettes.

2. Device according to Claim 1, characterized in that the lateral inlet (44) and the lateral outlet (45) for the optical fibres are located in each cassette (40a, 40b, 40c, 40d) opposite each other and the means for housing the reserve lengths and the splices include two spools (41, 42), around which the optical fibres entering via the said lateral inlet (44) and leaving via the said lateral outlet (45) respectively are coiled, and a housing (43), located between the two spools (41, 42), which is intended for stowing the splices.

3. Device according to either of Claims 1 and 2, characterized in that the cassettes (40a, 40b, 40c, 40d) are provided at the rear with mounting tabs (46) formed by bending a raised rear edge (47a) of the cassette at right angles or moulded as one piece, two holes (48a, 48b) passing through each mounting tab for the hinged connection to a cassette immediately above and to a cassette immediately below, respectively, the said lateral inlets and outlets for the optical fibres being formed near the said mounting tabs (46).

4. Device according to one of Claims 1 to 3, characterized in that the cassettes (40a, 40b, 40c, 40d) are hinged so that they pivot to the rear through more than 90°.

5. Device according to one of Claims 1 to 4, characterized in that the cassettes (40a, 40b, 40c) located under the top cassette (40d) are each provided with first catching means (49a) and the cassettes (40b, 40c, 40d) located above the bottom cassette (40a) are provided with second catching means (49b) capable of engaging with the first catching means, in a removable manner, in order to fasten the cassettes together, the first and second catching means being of the type using a fabric with loops and a fabric with hooks.

6. Device according to one of Claims 1 to 5, characterized in that the said opening (15) in the rack is made on one side of the rack below the support tray (20) in the rear position and in that the device includes a guiding piece (50) capable of giving the optical fibres, outside the rack, a sufficient radius of curvature during their passage through the said opening, provided with reversible mounting means on the rack so that the guiding piece can be oriented downwards or upwards depending on the direction to be given to the optical fibres outside the rack.

7. Device according to one of Claims 1 to 6, characterized in that the front longitudinal wall (14) has a plurality of identical cut-outs (130) and of holes (100, 110, 120) for mounting the said connecting connectors on this wall, these being uniformly spaced apart and capable of allowing several types of different connectors to be mounted.

8. Device according to one of Claims 1 to 7, characterized in that the means for guiding the fibres in the said protected space comprise yokes (31a, 31b, etc.) for guiding the optical fibres, the said guiding yokes being placed on the bottom of the rack, on a rear wall (16) of the rack and on its side walls (11, 12), in order to guide the optical fibres from the said opening (15) in an inflected line (201) of which the concavity, and then the convexity, is oriented towards a first side wall (12) of the rack on the side on which the said opening is made, in a line (202) describing a U of which the concavity is oriented towards the said first side wall (12), in a straight line (203) going along the rear wall (16) of the rack upwards and in a line (204) describing a U of which the convexity is oriented towards the said first side wall (12) as far as the lateral inlets (44) of the cassettes, and from the lateral outlets (45) of the cassettes in a line (205) describing a U of which the concavity is oriented towards the said first side wall (12), in a straight line (206) going along the rear wall (16) of the rack downwards and in a line (207) making a 90° bend towards the front wall (14).

9. Device according to one of Claims 1 to 8, characterized in that the rack (10) is to be fitted between two vertical uprights (1, 2) of a support frame, by means of fasteners (300) each having a baseplate (305) to be attached to the internal face of a side wall of the rack and hooks (301, 302) to be engaged in holes in the side wall and in the adjacent upright.

## Patentansprüche

1. Anschlußvorrichtung für Lichtleitfasern (F) mit:
- einem länglichen Rahmen (10), welcher zwei unten durch einen Boden (13) verbundene Seitenwände (11, 12) aufweist, einer Öffnung (15) in einer der Seitenwände des Rahmens filr das Einführen der Lichtleitfasern, sowie einer länglichen Platte (14) für die Anordnung von Verbindungsstücken für den Anschluß von Lichtleitfasern an photoelektronische Module,
- einer horizontale Tragplatte (20), welche mit einer Möglichkeit des Gleitens nach vorne zwischen den beiden Seitenwänden (11, 12) des Rahmens (10) angebracht ist, und welche mit dem Boden (13) dieses letzteren einen geschützten Raum (30) für die Ausbreitung der Lichtleitfasern bereitstellt, wenn sich die Platte in der hinteren Position befindet, wobei der Raum von oben zugänglich wird, wenn die Platte durch Gleiten in die vordere Position geschoben wird, und
- einer Vielzahl von übereinandergelegten Kassetten (40a, 40b, 40c, 40d), welche jeweils mit einem seitlichen Ein- (44) und Ausgang (45) für die Lichtleitfasern und Vorrichtungen zum Lagern von Lichtleitfäserreservelängen und der Spleißstellen der angeschlossenen Fasern ausgestattet sind, wobei die Vielzahl von Kassetten von der Tragplatte getragen wird,
dadurch gekennzeichnet, daß:
- die Kassetten (40a, 40b, 40c, 40d) aufeinander gelenkig angebracht sind, wobei die untere Kassette (40a) der Kassettenvielzahl auf der Tragplatte (20) befestigt ist und die anderen Kassetten (40b, 40c, 40d) der Kassettenvielzahl dafür geeignet sind, nach hinten zu schwenken, um den Zugang zu einer unterhalb angeordneten Kassette freizugeben,
- der Rahmen (10) außerdem eine längliche Vorderwand (14) aufweist, welche sich in dem Sinn der Höhe unterhalb der Ebene der Tragplatte der Kassetten (40a, 40b, 40c, 40d) erstreckt, wobei die Platte für die Anbringung der Verbindungsstücke für den Anschluß der Lichtleitfasern von der länglichen Vorderwand (14) gebildet ist, und
- die Vorrichtung außerdem Vorrichtungen (31a, 31b, 31c, 31d) für die Führung der Lichtleitfasern in dem geschützten Raum (30) aufweist, welche derart angeordnet sind, daß sie die Lichtleitfasern unter Einhaltung des Mindestkrümmungsradius zwischen der Öffnung (15) in der Seitenwand des Rahmens, den Anschlußverbindungsstücken, welche in der länglichen Vorderwand angeordnet sein müssen, und den seitlichen Ein- (44) und Ausgängen (45) der Kassetten führen.

2. Vorrichtung gemäß Anspruch 1, dadurch gekennzeichnet, daß in jeder Kassette (40a, 40b, 40c, 40d) der Seiteneingang (44) und -ausgang (45) für die Lichtleitfasern einander gegenüberliegend angeordnet sind, und die Vorrichtungen zur Lagerung der Reservelängen und der Spleißstellen zwei Trommeln (41, 42), auf welchen die jeweils durch den Seiteneingang (44) und den Seitenausgang (45) ankommenden und herausgehenden Lichtleitfasern aufgewickelt sind, und ein zwischen den beiden Trommeln (41, 42) angeordnetes Gehäuse (43) aufweisen, welches dafür bestimmt ist, die Spleißstellen unterzubringen.

3. Vorrichtung gemäß einem der Ansprüche 1 und 2, dadurch gekennzeichnet, daß die Kassetten (40a, 40b, 40c, 40d) hinten mit Montagehaltern (46) ausgestattet sind, welche durch Biegen im rechten Winkel einer hochgezogenen Hinterkante (47a) der Kassette oder durch Formpressen ausgebildet werden, und welche jeweils von zwei Durchbohrungen (48a, 48b) für die gelenkige Verbindung mit jeweils einer unmittelbar oberhalb liegenden Kassette und einer unmittelbar unterhalb liegenden Kassette durchquert werden, wobei die seitlichen Ein- und Ausgänge für die Lichtleitfasern in der Nähe der Montagehalter (46) ausgebildet sind.

4. Vorrichtung gemäß einem der Ansprüche 1 bis 3, dadurch gekennzeichnet, daß die Kassetten (40a, 40b, 40c, 40d) derart gelenkig angebracht sind, daß das Schwenken nach hinten um mehr als 90° durchgeführt wird.

5. Vorrichtung gemäß einem der Ansprüche 1 bis 4, dadurch gekennzeichnet, daß die unter der oberen Kassette (40d) angeordneten Kassetten (40a, 40b, 40c) jeweils mit ersten Befestigungsvorrichtungen (49a) ausgestattet und die oberhalb der unteren Kassette (40a) angeordneten Kassetten (40b, 40c, 40d) mit zweiten Befestigungsvorrichtungen (49b) ausgestattet sind, welche dafür geeignet sind, in lösbarer Weise mit den ersten Befestigungsvorrichtungen zusammenzuwirken, um die Kassetten miteinander einstückig auszubilden, wobei die ersten und zweiten Befestigungsvorrichtungen von der Art sind, daß sie ein Schlaufengebilde und ein Hakengebilde zum Einsatz bringen.

6. Vorrichtung gemäß einem der Ansprüche 1 bis 5, dadurch gekennzeichnet, daß die Öffnung (15) des Rahmens auf einer unterhalb der sich in hinterer Position befindlichen Tragplatte (20) liegenden Seite des Rahmens angeordnet ist, und daß die Vorrichtung ein Führungsteil (50) aufweist, welches dafür geeignet ist, den Lichtleitfasern außerhalb des Rahmens einen ausreichenden Krümmungsradius während ihres Durchgangs durch die Öffnung zu verleihen, und welches mit auf dem Rahmen umkehrbaren Montagevorrichtungen ausgestattet ist, so daß das Führungsteil nach unten oder nach oben gemäß der den Lichtleitfasern außerhalb des Rahmens zu gebenden Richtung ausgerichtet werden kann.

7. Vorrichtung gemäß einem der Ansprüche 1 bis 6, dadurch gekennzeichnet, daß die längliche Vorderwand (14) eine Vielzahl von identischen Ausschnitten (130) und Durchbohrungen (100, 110, 120) für die Montage der Anschlußverbindungsstücke auf dieser Wand aufweist, welche regelmäßig beabstandet und dafür geeignet sind, die Montage von mehreren Arten von verschiedenen Verbindungsstücken zuzulassen.

8. Vorrichtung gemäß einem der Ansprüche 1 bis 7, dadurch gekennzeichnet, daß die Vorrichtungen zur Führung der Lichtleitfasern in dem geschützten Raum Führungsbügel (31a, 31b,...) für die Lichtleitfasern aufweisen, welche auf dem Boden des Rahmens, auf einer hinteren Wand (16) des Rahmens und auf seinen Seitenwänden (11, 12) angeordnet sind, um die Lichtleitfasern von der Öffnung (15) entlang einer gebogenen Linie (201), deren Konkavität und anschließende Konvexität zu einer ersten Seitenwand (12) des Rahmens auf der Seite hin gerichtet ist, auf welcher die Öffnung angeordnet ist, entlang einer ein U beschreibenden Linie (202), deren Konkavität zu der ersten Seitenwand (12) hin gerichtet ist, entlang einer die hintere Wand (16) des Rahmens entlanglaufenden, geraden Linie (203) unter Ausrichtung nach oben und entlang einer ein U beschreibenden Linie (204), deren Konvexität zu der ersten Seitenwand (12) hin gerichtet ist, bis zu den Seiteneingängen (44) der Kassetten und von den Seitenausgängen (45) der Kassetten entlang einer ein U beschreibenden Linie (205), deren Konkavität zu der ersten Seitenwand (12) hin gerichtet ist, entlang einer die hintere Wand (16) des Rahmens entlanglaufenden, geraden Linie (206) unter Ausrichtung nach unten und entlang einer Linie (207), welche eine Biegung um 90° zu der Vorderwand (14) hin macht, zu führen.

9. Vorrichtung gemäß einem der Ansprüche 1 bis 8, dadurch gekennzeichnet, daß der Rahmen (10) zwischen zwei vertikalen Stützen (1, 2) eines Gestells mittels Befestigungsteilen (300) anzuordnen ist, welche jeweils einen auf der Innenseite einer Seitenwand des Rahmens zu befestigenden Flansch (305) und Haken (301, 302) zum Eingriff in Durchbohrungen der Seitenwand und der angrenzenden Stütze aufweisen.
